# EUROPEAN PATENT SPECIFICATION

(11) **EP 4 160 804 B1**
(45) Date of publication and mention of the grant of the patent: **24.04.2024**
(21) Application number: 22190076.4
(22) Date of filing: 11.08.2022
(51) Int. Cl.: H01M 50/403, H01M 10/0525, H01M 50/417, H01M 50/434, H01M 50/44, H01M 50/446, H01M 50/449

(54) **COATED SEPARATOR FOR LITHIUM ION BATTERY AND METHOD FOR PREPARING SAME**
BESCHICHTETER SEPARATOR FÜR LITHIUM-IONEN-BATTERIE UND VERFAHREN ZUM HERSTELLEN DESSELBEN
SÉPARATEUR REVÊTU POUR BATTERIE AU LITHIUM-ION ET SON PROCÉDÉ DE PRÉPARATION

(30) Priority: 30.09.2021 CN 202111164192
(43) Date of publication of application: 05.04.2023
(73) Proprietor: Jiangsu Horizon New Energy Tech Co., Ltd, Jintan District Changzhou Jiangsu 213213 (CN)
(72) Inventor: ZHANG, Xuehu, Changzhou, 213213 (CN); ZHANG, Libin, Changzhou, 213213 (CN); SHEN, Yading, Changzhou, 213213 (CN)
(74) Representative: Bayramoglu et al.

(56) References cited:
- EP-A1- 3 846 245
- FAN CHAO-YING ET AL: "The Effective Design of a Polysulfide-Trapped Separator at the Molecular Level for High Energy Density Li-S Batteries", APPLIED MATERIALS & INTERFACES, vol. 8, no. 25, 20 June 2016 (2016-06-20), pages 16108-16115, XP093025640, US ISSN: 1944-8244, DOI: 10.1021/acsami.6b04578
- KOTRONIA ANTONIA ET AL: "Catalytically graphitized freestanding carbon foams for 3D Li-ion microbatteries", JOURNAL OF POWER SOURCES ADVANCES, vol. 1, 1 February 2020 (2020-02-01), page 100002, XP093025651, ISSN: 2666-2485, DOI: 10.1016/j.powera.2020.100002
- "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf
- Cps Instruments Europe: "Comparison of Particle Sizing Methods", , 1 January 2019 (2019-01-01), XP055615022, Retrieved from the Internet: URL:http://www.cpsinstruments.eu/pdf/Compa re%20Sizing%20Methods.pdf [retrieved on 2019-08-23]
- A. Trunschke: "Particle size measurement 03/11/2006 A. Trunschke Further reading Modern Methods in Heterogeneous Catalysis Research", , 3 November 2006 (2006-11-03), XP055615050, Retrieved from the Internet: URL:http://www.fhi-berlin.mpg.de/acnew/dep artment/pages/teaching/pages/teaching__win tersemester__2006_2007/trunschke_particles ize_031106.pdf [retrieved on 2019-08-23]

## Description

### TECHNICAL FIELD

The present invention relates to the field of battery separators, and in particular to a coated separator for lithium ion battery and a method for preparing the same.

### BACKGROUND

Lithium ion batteries feature absence of memory effect, slow self-discharge, high energy density, etc., and are widely applied to portable consumer electronic products. With the development and progression of society, there is an increasing energy storage need in portable electric devices, hybrid electric vehicles and aerospace applications, leading to an ascending demand on the lithium ion battery. A lithium ion battery comprises an anode, a separator, a cathode and an electrolyte, in which the separator plays an important role in preventing the physical contact between the anode and the cathode, and also serves as a reservoir layer for the electrolyte such that ions can be transmitted between the anode and the cathode. The battery separator should have the following characteristics: resistance to strong oxidation-reduction environment, and high electrochemical stability; high flexibility and high mechanical strength, to facilitate industrial manufacture and daily use; high porosity, beneficial to the permeation and adsorption of liquid electrolyte; and high thermal stability, which can ensure the battery safety at an increased working temperature.

In the prior art, polyolefin coated separators are commonly used for lithium ion batteries, and although the polyolefin-coated membranes show good electrochemical stability, mechanical strength and thermal shrinkage resistance, the polyolefin-coated membrane has defects in that: prominently used coating materials alumina, boehmite and silica have low heat transfer coefficients, such that the cannot be transferred into the interior of the battery in time, resulting in the short circuit of the battery caused by local overheating; the polyolefin coated membrane has poor liquid absorption and retention capabilities, which may result in low ionic conductivity; the pores are easily blocked by the coating material, thus hindering the transmission of lithium ions.

EP 3 846 245 A1 discloses coating a separator base with a coating liquid comprising a ceramic powder, an adhesive, a solvent, a surfactant, a dispersant and carbon nanotubes, which are mixed and stirred. The coating is carried out by roller coating and typical separator base materials are polyethylene or polypropylene microporous films. The separator is applied for lithium ion batteries.

Fan Chao-Ying et al, discloses coating a fibrous separator with a slurry including a solvent, PVDF and graphitic carbon (Fan Chao-Ying et al, "The Effective Design of a Polysulfide-Trapped Separator at the Molecular Level for High Energy Density Li-S Batteries", APPLIED MATERIALS & INTERFACES, vol. 8, no. 25, 20 June 2016 (2016-06-20), pages 16108-16115, ISSN: 1944-8244, DOI: 10.1021/acsami.6b04578).

### SUMMARY

The present invention is intended to provide a coated separator for lithium ion battery and a method for preparing the same, to solve the problems in the prior art.

The problem is solved by a method according to claim 1 and a separator according to claim 7.

In order to solve the above technical problems, the present invention provides following technical schemes:
A method for preparing a coated separator for lithium ion battery, comprising:
S1: selection of a base membrane:
   selecting the base membrane from a polyethylene membrane, a polypropylene membrane, a non-woven fabric membrane and a polyimide membrane;
S2: preparation of a coating slurry:
   stirring ultrapure water and the dispersant for 10-30 min at a rotation speed of 300-500 rpm; adding the ceramic powder into the mixture, and stirring for 30-60 min at a rotation speed of 400-800 rpm; adding the graphitized carbon foam into the mixture, and stirring for 30-60 min at a rotation speed of 400-800 rpm; adding the thickening agent into the mixture, and stirring for 50-80 min at a reduced rotation speed of 400-700 rpm; adding the binder into the mixture, and stirring for 20-40 min at a reduced rotation speed of 400-600 rpm; and finally adding the wetting agent into the mixture, stirring for 20-40 min at a rotation speed of 300-500 rpm, and filtering to obtain the coating slurry;
S3: preparation of a coated separator:
   uniformly applying the coating slurry in step S2 on the base membrane in step S1 by roll coating, and drying and rolling up the coated base membrane to obtain the coated separator for lithium ion battery, and wherein
   the preparation of the graphitized carbon foam comprises: soaking a wood in an ammonia solution in an oil bath at 100 °C for 3-4 h; repeatedly washing the wood with deionized water and absolute ethanol 2-5 times; after drying, heating the wood at 890-900 °C in nitrogen atmosphere for 2-3 h; cutting the wood into carbon sheets, and soaking the carbon sheets into a mixed acid solution of nitric acid and sulfuric acid for 30 min; washing the carbon sheets with deionized water and absolute ethanol until the washings are neutral; soaking the carbon sheets in an iron(III) nitrate solution in an oil bath at 80 °C for 6 h, and heating the carbon sheets at 900 °C in nitrogen atmosphere for 2 h; after cooling, soaking the carbon sheets in a dilute nitric acid solution, and stirring the system for 30 min at 80 °C; washing the carbon sheets with deionized water and absolute ethanol until the washings show a neutral pH value, and drying to obtain the graphitized carbon foam.

Furthermore, the preparation of the ceramic powder comprises: adjusting a graphene oxide solution to pH 10-11 by adding ammonia water; dissolving nano-alumina into a mixed solution of ethanol and deionized water, adding the mixture into the graphene oxide solution and sonicating the mixture for 2-3 h; centrifuging the mixture, and lyophilizing the paste precipitate in liquid nitrogen; heating the product at 990-1010 °C for 0.5-1 h in nitrogen atmosphere to obtain a nano-alumina hybrid powder; and mixing the nano-alumina hybrid powder with suspensions of micro-alumina, micro-boehmite, micro-silica, micro-magnesium hydroxide and a bacterial cellulose nano-particle, and stirring the mixture in a blender for 10 min to obtain the ceramic powder.

A graphitized carbon foam prepared by the present invention is low in cost, environment-friendly and efficient. A porous wood-derived carbon material is acidified to increases the hydrophilicity of the inner wall of the pores in the wood. The acidification is catalyzed by iron(III) nitrate at a high temperature, which realizes the generation of Fe₃C and SP²⁺ carbon and the pore formation at the same time, thus synchronously implementing the activation and graphitization.

Furthermore, in step S2, the coating slurry comprises 100-200 parts of the ultrapure water, 0.46-2.4 parts of the dispersant, 40-80 parts of the ceramic powder, 20-40 parts of the graphitized carbon foam, 0.52-3.3 parts of a thickening agent, 1.3-4.5 parts of the binder and 0.18-0.36 part of the wetting agent, as per part by weight.

The thickening agent is carboxymethyl cellulose sodium (CMC colloid);

Furthermore, the dispersant is one of oleylamine acetate, an alkyl quaternary ammonium salt, aminopropylamine dioleate, a polyethylene glycol type polyalcohol, a polyethylenimine derivative and oleylamine oleate.

Furthermore, the binder is one of a cyanoacrylate derivative binder, a cyanoacrylate-polyethylene glycol binder, an acrylic acid binder and a vinyl acetate polymer latex binder.

Furthermore, the wetting agent is one of a polyoxyethylene surfactant, a fatty acid surfactant and a silanol nonionic surfactant.

Furthermore, the separator has a thickness of 0.2-5 µm.

Furthermore, the mass ratio of graphene oxide to nano-alumina is 9:46; by limiting the mass ratio of graphene oxide to nano-alumina, the coating amount of nano-alumina on graphene oxide is increased.

The particle size is limited to 20-40 µm for micro-alumina, micro-silica and micro-magnesium hydroxide, and 800-900 nm for the bacterial cellulose nano-particle.

By limiting the mass ratio of the graphene oxide to the nano-alumina, a nano-alumina hybrid powder is obtained, which is compounded with micro-alumina, micro-boehmite, micro-silica, micro-magnesium hydroxide and the bacterial cellulose nano-particle to form a connected heat transfer network, wherein the nano-alumina hybrid powder serves as a bridge for electric conduction to improve the connectivity of the heat transfer network helps, thus uniformly distributing the heat and avoiding local overheating. The particle sizes of micro-alumina, micro-silica, micro-magnesium hydroxide and the bacterial cellulose nano-particle are limited to improve the effective thermal conduction channels in an out-of-plane direction of the separator, thus improving the heat transfer coefficient of the separator. The addition of the bacterial cellulose effectively reduces internal stress on the surface of the separator and prolongs the service life of the battery.

Furthermore, the micro-alumina, the micro-silica, the micro-magnesium hydroxide have a spherical structure. When the particle sizes of micro-alumina, micro-silica and micro-magnesium hydroxide are obviously smaller than a plane size of the nano hybrid powder, the spherical particles provide smaller support for the nano-alumina hybrid powder; with the increasing of the diameters, the supporting angle for the nano-alumina hybrid powder is increased, and the orientation range of the nano-alumina hybrid powder along the out-of-plane direction is improved, thereby increasing the heat transfer coefficient in the out-of-plane direction.

### Beneficial Effects:

Existing separators for lithium ion battery in the prior art may easily cause local overheating and thus short circuit due to reasons of process, raw materials and the like. The graphitized carbon foam used in the present invention has a high heat transfer coefficient, and can transfer heat from the separator surface to the interior of the battery in time, helping to prevent short circuit caused by local overheating. The graphitized carbon foam adopted has a high porosity, and will not excessively block the pores of the base membrane, helping to reduce the air permeability increment, provide a channel for lithium ion transmission, reduce the internal resistance and thereby increase the battery capacity. The well-developed pores of the graphitized carbon foam are beneficial to the infiltration of electrolyte and to increasing the liquid absorption and retention capabilities of the separator, such that the conductivity of lithium ions is improved. The raw material of the graphitized carbon foam is derived from coal tar pitch featuring cost-efficiency, and is favorable for reducing the price of the separator and thereby promoting the large-scale application of the battery.

Furthermore, the graphitized carbon foam used in the present invention is low in cost, environment-friendly and efficient. A porous wood-derived carbon material is acidified to increases the hydrophilicity of the inner wall of the pores in the wood. The acidification is catalyzed by iron(III) nitrate at a high temperature, which realizes the generation of Fe₃C and SP²⁺ carbon and the pore formation at the same time, thus synchronously implementing the activation and graphitization.

Furthermore, the ceramic powder is modified, and by limiting the mass ratio of graphene oxide to nano-alumina, a nano-alumina hybrid powder is prepared, which is then compounded with micro-alumina, micro-boehmite, micro-silica, micro-magnesium hydroxide and a bacterial cellulose nano-particle to form a connected heat transfer network, thus improving the connectivity of the heat transfer network helps, uniformly distributing the heat and avoiding local overheating. The particle sizes of the micro-alumina, the micro-silica and the bacterial cellulose nano-particle are limited to improve the effective thermal conduction channels in an out-of-plane direction of the separator, thus improving the heat transfer coefficient of the separator. The addition of the bacterial cellulose effectively reduces internal stress on the surface of the separator and prolongs the service life of the battery.

### DETAILED DESCRIPTION

The technical schemes of the present invention will be clearly and completely described below with reference to the examples of the present invention, and it is obvious that the described examples are only a part of the examples of the present invention, and not all of them. Based on the examples in the present invention, all other examples obtained by those of ordinary skill in the art without creative work shall fall within the protection scope of the present invention.

It should be noted that directional indications such as upper, lower, left, right, front, rear, etc., involved in the examples of the present invention are only used for explaining a specific posture such as relative positions of components, motion situation, etc., and if the specific posture is changed, the directional indications are changed accordingly. In addition, technical schemes of different examples may be combined, which, however, must be on the basis that they can be realized by one skilled in the art, and when the technical schemes in a combination are contradictory to each other or the combination cannot be realized, such combination should be considered inexistent, and is out of the protection scope of the present invention.

The technical schemes of the present invention are further described in detail with reference to specific examples, and it should be understood that the following examples are only for illustrating, rather than limiting, the present invention.

### Example 1 (not part of the present invention)

S1: selection of a base membrane:
   A polypropylene membrane was selected as a base membrane.
S2: preparation of a coating slurry:
   1.43 parts of oleylamine acetate were added into 150 parts of ultrapure water, and the mixture was stirred at 400 rpm for 10 min. Then 60 parts of alumina powder were added, and the mixture was stirred at 500 rpm for 30 min. 30 parts of coal tar-graphitized carbon foam were added, and the mixture was stirred at 600 rpm for 60 min. 1.91 parts of CMC colloid were added, and the mixture was stirred at 600 rpm for 60 min. 2.8 parts of cyanoacrylate-polyethylene glycol binder were added, and the mixture was stirred at 500 rpm for 30 min. Finally, 0.27 parts of polyoxyethylene surfactant were added, and the mixture was stirred at 400 rpm for 30 min and filtered to remove iron, so as to obtain the coating slurry.
S3: preparation of a coated separator:
   The coating slurry in step S2 was uniformly applied on the base membrane in step S1 by roll coating, and the coated base membrane was dried and rolled up to obtain the coated separator for lithium ion battery.

### Example 2 (not part of the present invention)

S1: selection of a base membrane:
   A polyethylene membrane was selected as a base membrane.
S2: preparation of a coating slurry:
   1.43 parts of alkyl quaternary ammonium salt were added into 150 parts of ultrapure water, and the mixture was stirred at 400 rpm for 10 min. Then 60 parts of silica powder were added, and the mixture was stirred at 500 rpm for 30 min. 40 parts of thermally pyrolyzed coal tar pitch-graphitized carbon foam were added, and the mixture was stirred at 600 rpm for 60 min. 1.91 parts of CMC colloid were added, and the mixture was stirred at 600 rpm for 60 min. 2.8 parts of cyanoacrylate derivative binder were added, and the mixture was stirred at 500 rpm for 30 min. Finally, 0.27 parts of fatty acid surfactant were added, and the mixture was stirred at 400 rpm for 30 min and filtered to remove iron, so as to obtain the coating slurry.
S3: preparation of a coated separator:
   The coating slurry in step S2 was uniformly applied on the base membrane in step S1 by roll coating, and the coated base membrane was dried and rolled up to obtain the coated separator for lithium ion battery.

### Example 3 (not part of the present invention)

S1: selection of a base membrane:
   A polyimide membrane was selected as a base membrane.
S2: preparation of a coating slurry:
   1.43 parts of polyethylene glycol type polyalcohol were added into 150 parts of ultrapure water, and the mixture was stirred at 400 rpm for 10 min. Then 60 parts of magnesium hydroxide powder were added, and the mixture was stirred at 500 rpm for 30 min. 20 parts of coal tar-graphitized carbon foam were added, and the mixture was stirred at 600 rpm for 60 min. 1.91 parts of CMC colloid were added, and the mixture was stirred at 600 rpm for 60 min. 2.8 parts of acrylic acid binder were added, and the mixture was stirred at 500 rpm for 30 min. Finally, 0.27 parts of silanol nonionic surfactant were added, and the mixture was stirred at 400 rpm for 30 min and filtered to remove iron, so as to obtain the coating slurry.
S3: preparation of a coated separator:
   The coating slurry in step S2 was uniformly applied on the base membrane in step S1 by roll coating, and the coated base membrane was dried and rolled up to obtain the coated separator for lithium ion battery.

### Example 4

S1: selection of a base membrane:
   A polyethylene membrane was selected as a base membrane.
S2: preparation of a coating slurry:
   1.43 parts of alkyl quaternary ammonium salt were added into 150 parts of ultrapure water, and the mixture was stirred at 400 rpm for 10 min. Then 60 parts of ceramic powder were added, and the mixture was stirred at 500 rpm for 30 min. 40 parts of graphitized carbon foam were added, and the mixture was stirred at 600 rpm for 60 min. 1.91 parts of CMC colloid were added, and the mixture was stirred at 600 rpm for 60 min. 2.8 parts of cyanoacrylate derivative binder were added, and the mixture was stirred at 500 rpm for 30 min. Finally, 0.27 parts of fatty acid surfactant were added, and the mixture was stirred at 400 rpm for 30 min and filtered to remove iron, so as to obtain the coating slurry.

The graphitized carbon foam was prepared by the following process: A wood was soaked in an ammonia solution in an oil bath at 100 °C for 3 h, repeatedly washed with deionized water and absolute ethanol twice, dried, heated at 890 °C in nitrogen atmosphere for 3 h and cut into carbon sheets. The carbon sheets were soaked into a mixed acid solution of nitric acid and sulfuric acid for 30 min; washed with deionized water and absolute ethanol until the washings were neutral; soaked in an iron(III) nitrate solution in an oil bath at 80 °C for 6 h, heated at 900 °C in nitrogen atmosphere for 2 h, cooled, and soaked in a dilute nitric acid solution, and the system was stirred for 30 min at 80 °C. The carbon sheets was washed with deionized water and absolute ethanol until the washings showed a neutral pH value, and dried to obtain the graphitized carbon foam.

The ceramic powder prepared by the following process: A graphene oxide solution was adjusted to pH 10 by adding ammonia water. Nano-alumina was dissolved in a mixed solution of ethanol and deionized water, and the mixture was added into the graphene oxide solution. The resulting mixture was sonicated for 2 h and centrifuged, and the paste precipitate was lyophilized in liquid nitrogen. The product was heated at 990 °C for 0.5 h in nitrogen atmosphere to obtain a nano-alumina hybrid powder. The nano-alumina hybrid powder was mixed with suspensions of micro-alumina, micro-boehmite, micro-silica, micro-magnesium hydroxide and a bacterial cellulose nano-particle, and the mixture was stirred in a blender for 10 min to obtain the ceramic powder.

The mass ratio of the graphene oxide to the nano-alumina was 9:46. The particle size was limited to 20 µm for micro-alumina, micro-silica and micro-magnesium hydroxide, and 800 nm for the bacterial cellulose nano-particle.

### S3: preparation of a coated separator:

The coating slurry in step S2 was uniformly applied on the base membrane in step S1 by roll coating, and the coated base membrane was dried and rolled up to obtain the coated separator for lithium ion battery.

### Example 5

S1: selection of a base membrane:
   A polyethylene membrane was selected as a base membrane.
S2: preparation of a coating slurry:
   1.43 parts of alkyl quaternary ammonium salt were added into 150 parts of ultrapure water, and the mixture was stirred at 400 rpm for 10 min. Then 60 parts of ceramic powder were added, and the mixture was stirred at 500 rpm for 30 min. 40 parts of graphitized carbon foam were added, and the mixture was stirred at 600 rpm for 60 min. 1.91 parts of CMC colloid were added, and the mixture was stirred at 600 rpm for 60 min. 2.8 parts of cyanoacrylate derivative binder were added, and the mixture was stirred at 500 rpm for 30 min. Finally, 0.27 parts of fatty acid surfactant were added, and the mixture was stirred at 400 rpm for 30 min and filtered to remove iron, so as to obtain the coating slurry.

The graphitized carbon foam was prepared by the following process: A wood was soaked in an ammonia solution in an oil bath at 100 °C for 3.5 h, repeatedly washed with deionized water and absolute ethanol 4 times, dried, heated at 895 °C in nitrogen atmosphere for 2.5 h and cut into carbon sheets. The carbon sheets were soaked into a mixed acid solution of nitric acid and sulfuric acid for 30 min; washed with deionized water and absolute ethanol until the washings were neutral; soaked in an iron(III) nitrate solution in an oil bath at 80 °C for 6 h, heated at 900 °C in nitrogen atmosphere for 2 h, cooled, and soaked in a dilute nitric acid solution, and the system was stirred for 30 min at 80 °C. The carbon sheets was washed with deionized water and absolute ethanol until the washings showed a neutral pH value, and dried to obtain the graphitized carbon foam.

The ceramic powder prepared by the following process: A graphene oxide solution was adjusted to pH 10.5 by adding ammonia water. Nano-alumina was dissolved in a mixed solution of ethanol and deionized water, and the mixture was added into the graphene oxide solution. The resulting mixture was sonicated for 2.5 h and centrifuged, and the paste precipitate was lyophilized in liquid nitrogen. The product was heated at 1000 °C for 0.8 h in nitrogen atmosphere to obtain a nano-alumina hybrid powder. The nano-alumina hybrid powder was mixed with suspensions of micro-alumina, micro-boehmite, micro-silica, micro-magnesium hydroxide and a bacterial cellulose nano-particle, and the mixture was stirred in a blender for 10 min to obtain the ceramic powder.

The mass ratio of the graphene oxide to the nano-alumina was 9:46. The particle size was limited to 30 µm for micro-alumina, micro-silica and micro-magnesium hydroxide, and 850 nm for the bacterial cellulose nano-particle.

### S3: preparation of a coated separator:

The coating slurry in step S2 was uniformly applied on the base membrane in step S1 by roll coating, and the coated base membrane was dried and rolled up to obtain the coated separator for lithium ion battery.

### Example 6

S1: selection of a base membrane:
   A polyethylene membrane was selected as a base membrane.
S2: preparation of a coating slurry:
   1.43 parts of alkyl quaternary ammonium salt were added into 150 parts of ultrapure water, and the mixture was stirred at 400 rpm for 10 min. Then 60 parts of ceramic powder were added, and the mixture was stirred at 500 rpm for 30 min. 40 parts of graphitized carbon foam were added, and the mixture was stirred at 600 rpm for 60 min. 1.91 parts of CMC colloid were added, and the mixture was stirred at 600 rpm for 60 min. 2.8 parts of cyanoacrylate derivative binder were added, and the mixture was stirred at 500 rpm for 30 min. Finally, 0.27 parts of fatty acid surfactant were added, and the mixture was stirred at 400 rpm for 30 min and filtered to remove iron, so as to obtain the coating slurry.

The graphitized carbon foam was prepared by the following process: A wood was soaked in an ammonia solution in an oil bath at 100 °C for 4 h, repeatedly washed with deionized water and absolute ethanol 5 times, dried, heated at 900 °C in nitrogen atmosphere for 3 h and cut into carbon sheets. The carbon sheets were soaked into a mixed acid solution of nitric acid and sulfuric acid for 30 min; washed with deionized water and absolute ethanol until the washings were neutral; soaked in an iron(III) nitrate solution in an oil bath at 80 °C for 6 h, heated at 900 °C in nitrogen atmosphere for 2 h, cooled, and soaked in a dilute nitric acid solution, and the system was stirred for 30 min at 80 °C. The carbon sheets was washed with deionized water and absolute ethanol until the washings showed a neutral pH value, and dried to obtain the graphitized carbon foam.

The ceramic powder prepared by the following process: A graphene oxide solution was adjusted to pH 11 by adding ammonia water. Nano-alumina was dissolved in a mixed solution of ethanol and deionized water, and the mixture was added into the graphene oxide solution. The resulting mixture was sonicated for 3 h and centrifuged, and the paste precipitate was lyophilized in liquid nitrogen. The product was heated at 1010 °C for 1 h in nitrogen atmosphere to obtain a nano-alumina hybrid powder. The nano-alumina hybrid powder was mixed with suspensions of micro-alumina, micro-boehmite, micro-silica, micro-magnesium hydroxide and a bacterial cellulose nano-particle, and the mixture was stirred in a blender for 10 min to obtain the ceramic powder.

The mass ratio of the graphene oxide to the nano-alumina was 9:46. The particle size was limited to 40 µm for micro-alumina, micro-silica and micro-magnesium hydroxide, and 900 nm for the bacterial cellulose nano-particle.

### S3: preparation of a coated separator:

The coating slurry in step S2 was uniformly applied on the base membrane in step S1 by roll coating, and the coated base membrane was dried and rolled up to obtain the coated separator for lithium ion battery.

### Comparative Example 1

S1: selection of a base membrane:
   A polypropylene membrane was selected as a base membrane.
S2: preparation of a coating slurry:
   1.43 parts of oleylamine acetate were added into 150 parts of ultrapure water, and the mixture was stirred at 400 rpm for 10 min. Then 60 parts of alumina powder were added, and the mixture was stirred at 500 rpm for 30 min. 1.91 parts of CMC colloid were added, and the mixture was stirred at 600 rpm for 60 min. 2.8 parts of cyanoacrylate-polyethylene glycol binder were added, and the mixture was stirred at 500 rpm for 30 min. Finally, 0.27 parts of polyoxyethylene surfactant were added, and the mixture was stirred at 400 rpm for 30 min and filtered to remove iron, so as to obtain the coating slurry.
S3: preparation of a coated separator:
   The coating slurry in step S2 was uniformly applied on the base membrane in step S1 by roll coating, and the coated base membrane was dried and rolled up to obtain the coated separator for lithium ion battery.

### Comparative Example 2

S1: selection of a base membrane:
   A polyethylene membrane was selected as a base membrane.
S2: preparation of a coating slurry:
   1.43 parts of alkyl quaternary ammonium salt were added into 150 parts of ultrapure water, and the mixture was stirred at 400 rpm for 10 min. Then 60 parts of ceramic powder were added, and the mixture was stirred at 500 rpm for 30 min. 40 parts of thermally pyrolyzed coal tar pitch-graphitized carbon foam were added, and the mixture was stirred at 600 rpm for 60 min. 1.91 parts of CMC colloid were added, and the mixture was stirred at 600 rpm for 60 min. 2.8 parts of cyanoacrylate derivative binder were added, and the mixture was stirred at 500 rpm for 30 min. Finally, 0.27 parts of fatty acid surfactant were added, and the mixture was stirred at 400 rpm for 30 min and filtered to remove iron, so as to obtain the coating slurry.

The ceramic powder prepared by the following process: A graphene oxide solution was adjusted to pH 11 by adding ammonia water. Nano-alumina was dissolved in a mixed solution of ethanol and deionized water, and the mixture was added into the graphene oxide solution. The resulting mixture was sonicated for 3 h and centrifuged, and the paste precipitate was lyophilized in liquid nitrogen. The product was heated at 1010 °C for 1 h in nitrogen atmosphere to obtain a nano-alumina hybrid powder. The nano-alumina hybrid powder was mixed with suspensions of micro-alumina, micro-boehmite, micro-silica, micro-magnesium hydroxide and a bacterial cellulose nano-particle, and the mixture was stirred in a blender for 10 min to obtain the ceramic powder.

The mass ratio of the graphene oxide to the nano-alumina was 9:46. The particle size was limited to 40 µm for micro-alumina, micro-silica and micro-magnesium hydroxide, and 900 nm for the bacterial cellulose nano-particle.

### S3: preparation of a coated separator:

The coating slurry in step S2 was uniformly applied on the base membrane in step S1 by roll coating, and the coated base membrane was dried and rolled up to obtain the coated separator for lithium ion battery.

### Comparative Example 3

S1: selection of a base membrane:
   A polyethylene membrane was selected as a base membrane.
S2: preparation of a coating slurry:
   1.43 parts of alkyl quaternary ammonium salt were added into 150 parts of ultrapure water, and the mixture was stirred at 400 rpm for 10 min. Then 60 parts of silica powder were added, and the mixture was stirred at 500 rpm for 30 min. 40 parts of graphitized carbon foam were added, and the mixture was stirred at 600 rpm for 60 min. 1.91 parts of CMC colloid were added, and the mixture was stirred at 600 rpm for 60 min. 2.8 parts of cyanoacrylate derivative binder were added, and the mixture was stirred at 500 rpm for 30 min. Finally, 0.27 parts of fatty acid surfactant were added, and the mixture was stirred at 400 rpm for 30 min and filtered to remove iron, so as to obtain the coating slurry.

The graphitized carbon foam was prepared by the following process: A wood was soaked in an ammonia solution in an oil bath at 100 °C for 4 h, repeatedly washed with deionized water and absolute ethanol 5 times, dried, heated at 900 °C in nitrogen atmosphere for 3 h and cut into carbon sheets. The carbon sheets were soaked into a mixed acid solution of nitric acid and sulfuric acid for 30 min; washed with deionized water and absolute ethanol until the washings were neutral; soaked in an iron(III) nitrate solution in an oil bath at 80 °C for 6 h, heated at 900 °C in nitrogen atmosphere for 2 h, cooled, and soaked in a dilute nitric acid solution, and the system was stirred for 30 min at 80 °C. The carbon sheets was washed with deionized water and absolute ethanol until the washings showed a neutral pH value, and dried to obtain the graphitized carbon foam.

### S3: preparation of a coated separator:

The coating slurry in step S2 was uniformly applied on the base membrane in step S1 by roll coating, and the coated base membrane was dried and rolled up to obtain the coated separator for lithium ion battery.

Performance tests: the performance tests were performed on the separators prepared in Examples 1-6 and Comparative Examples 1-3. The liquid absorption rate and ionic conductivity were tested with reference to GB/T 36363-2018. The thickness of the membranes was measured by a Mahr Millimar system. The puncture strength was tested by a universal tensile testing machine. The air permeability increment was tested by a Kumagai air permeability tester. The thermal shrinkage was divided into longitudinal thermal shrinkage and transverse thermal shrinkage. During the test, a size change of the membranes was determined after the membranes were placed in an oven and heated at 120 °C for 1 hour, and the thermal shrinkage was calculated by the following formula: shrinkage% = (length (before heating) - length (after heating))/length (before heating) × 100%. The specific data are shown in Table 1.

**Table 1**

| | Base membrane thickness (µm) | Coating thickness (µm) | Air permeability increment (s) | Liquid absorption rate (%) | Ionic conductivity (µm/cm) | Puncture strength (gf) | Thermal shrinkage (120 °C/1 h) | |
|---|---|---|---|---|---|---|---|---|
| | | | | | | | MD | TD |
| Example 1 | 9 | 2 | 5 | 217 | 1.7 | 448 | 1.4 | 1.0 |
| Example 2 | 9 | 2 | 3 | 230 | 1.9 | 451 | 1.2 | 0.8 |
| Example 3 | 9 | 2 | 4 | 224 | 1.7 | 450 | 1.3 | 0.9 |
| Example 4 | 9 | 2 | 2 | 240 | 2.1 | 468 | 0.8 | 0.6 |
| Example 5 | 9 | 2 | 2 | 246 | 2.3 | 476 | 0.8 | 0.5 |
| Example 6 | 9 | 2 | 1 | 251 | 2.5 | 482 | 0.7 | 0.4 |
| Comparative Example 1 | 9 | 2 | 15 | 173 | 1.4 | 430 | 2.0 | 1.7 |
| Comparative Example 2 | 9 | 2 | 4 | 234 | 2.0 | 456 | 1.0 | 0.7 |
| Comparative Example 3 | 9 | 2 | 3 | 232 | 1.9 | 454 | 0.9 | 0.8 |

Table 1 shows the separators prepared in Examples 1-6 and Comparative Examples 1-3. In the comparison of Example 6 with Comparative Examples 2 and 3, additions of graphitized carbon foam and ceramic powder synergistically improve the heat transfer coefficient and various mechanical properties of the separator, and addition of bacterial cellulose effectively reduces the internal stress on the surface of the separator and prolongs the service life of the battery. It is known that the battery separator prepared according to the method disclosed herein has excellent performances.

## Claims

1. A method for preparing a coated separator for lithium ion battery, comprising:
S1: selection of a base membrane:
selecting the base membrane from a polyethylene membrane, a polypropylene membrane, a non-woven fabric membrane and a polyimide membrane;
S2: preparation of a coating slurry:
mixing ultrapure water, a dispersant, a ceramic powder, a graphitized carbon foam, a binder and a wetting agent and stirring the mixture to form the coating slurry;
S3: preparation of a coated separator:
uniformly applying the coating slurry in step S2 on the base membrane in step S1 by roll coating, and drying and rolling up the coated base membrane to obtain the coated separator for lithium ion battery,
**characterized in that**:
the preparation of the graphitized carbon foam comprises: soaking a wood in an ammonia solution in an oil bath at 100 °C for 3-4 h; repeatedly washing the wood with deionized water and absolute ethanol 2-5 times; after drying, heating the wood at 890-900 °C in nitrogen atmosphere for 2-3 h; cutting the wood into carbon sheets, and soaking the carbon sheets into a mixed acid solution of nitric acid and sulfuric acid for 30 min; washing the carbon sheets with deionized water and absolute ethanol until the washings are neutral; soaking the carbon sheets in an iron(III) nitrate solution in an oil bath at 80 °C for 6 h, and heating the carbon sheets at 900 °C in nitrogen atmosphere for 2 h; after cooling, soaking the carbon sheets in a dilute nitric acid solution, and stirring the system for 30 min at 80 °C; washing the carbon sheets with deionized water and absolute ethanol until the washings show a neutral pH value, and drying to obtain the graphitized carbon foam, and
the preparation of the ceramic powder comprises: adjusting a graphene oxide solution to pH 10-11 by adding ammonia water; dissolving nano-alumina into a mixed solution of ethanol and deionized water, adding the mixture into the graphene oxide solution and sonicating the mixture for 2-3 h; centrifuging the mixture, and lyophilizing the paste precipitate in liquid nitrogen; heating the product at 990-1010 °C for 0.5-1 h in nitrogen atmosphere to obtain a nano-alumina hybrid powder; and mixing the nano-alumina hybrid powder with suspensions of micro-alumina, micro-boehmite, micro-silica, micro-magnesium hydroxide and a bacterial cellulose nano-particle, and stirring the mixture in a blender for 10 min to obtain the ceramic powder.

2. The method for preparing the coated separator for lithium ion battery according to claim 1, wherein in step S2, the coating slurry comprises 100-200 parts of the ultrapure water, 0.46-2.4 parts of the dispersant, 40-80 parts of the ceramic powder, 20-40 parts of the graphitized carbon foam, 0.52-3.3 parts of a thickening agent, 1.3-4.5 parts of the binder and 0.18-0.36 part of the wetting agent, as per part by weight.

3. The method for preparing the coated separator for lithium ion battery according to claim 1, wherein the preparation of the coating slurry in step S2 comprises: stirring ultrapure water and the dispersant for 10-30 min at a rotation speed of 300-500 rpm; adding the ceramic powder into the mixture, and stirring for 30-60 min at a rotation speed of 400-800 rpm; adding the graphitized carbon foam into the mixture, and stirring for 30-60 min at a rotation speed of 400-800 rpm; adding the thickening agent into the mixture, and stirring for 50-80 min at a reduced rotation speed of 400-700 rpm; adding the binder into the mixture, and stirring for 20-40 min at a reduced rotation speed of 400-600 rpm; and finally adding the wetting agent into the mixture, stirring for 20-40 min at a rotation speed of 300-500 rpm, and filtering to obtain the coating slurry.

4. The method for preparing the coated separator for lithium ion battery according to claim 1, wherein the dispersant is one of oleylamine acetate, an alkyl quaternary ammonium salt, aminopropylamine dioleate, a polyethylene glycol type polyalcohol, a polyethylenimine derivative and oleylamine oleate.

5. The method for preparing the coated separator for lithium ion battery according to claim 1, wherein the binder is one of a cyanoacrylate derivative binder, a cyanoacrylate-polyethylene glycol binder, an acrylic acid binder and a vinyl acetate polymer latex binder.

6. The method for preparing the coated separator for lithium ion battery according to claim 1, wherein the wetting agent is one of a polyoxyethylene surfactant, a fatty acid surfactant and a silanol nonionic surfactant.

7. A coated separator for lithium ion battery prepared by the method according to any one of claims 1 to 6, wherein the separator has a thickness of 0.2-5 µm.

## Patentansprüche

1. Verfahren zum Herstellen eines beschichteten Separators für eine Lithium-Ionen-Batterie, umfassend:
S1: Auswahl einer Basismembran:
Auswählen der Basismembran aus einer Polyethylenmembran, einer Polypropylenmembran, einer Vliesstoffmembran und einer Polyimidmembran;
S2: Herstellung einer Beschichtungsmasse:
Mischen von Reinstwasser, einem Dispergiermittel, einem Keramikpulver, einem graphitierten Kohlenstoffschaum, einem Bindemittel und einem Benetzungsmittel und Rühren der Mischung, um die Beschichtungsmasse zu bilden;
S3: Herstellung eines beschichteten Separators:
gleichmäßiges Aufbringen der Beschichtungsmasse aus Schritt S2 auf die Basismembran aus Schritt S1 durch Walzbeschichten und Trocknen und Aufrollen der beschichteten Basismembran, um den beschichteten Separator für eine Lithium-Ionen-Batterie zu erhalten,
**dadurch gekennzeichnet, dass**:
die Herstellung des graphitierten Kohlenstoffschaums umfasst: Einweichen eines Holzes in einer Ammoniaklösung in einem Ölbad bei 100 °C für 3-4 h; wiederholtes, 2- bis 5-maliges Waschen des Holzes mit deionisiertem Wasser und absolutem Ethanol; nach dem Trocknen, Erhitzen des Holzes bei 890-900 °C in einer Stickstoffatmosphäre für 2-3 h; Schneiden des Holzes zu Kohlenstoffblättern und Einweichen der Kohlenstoffblätter in eine gemischte Säurelösung aus Salpetersäure und Schwefelsäure für 30 min; Waschen der Kohlenstoffblätter mit deionisiertem Wasser und absolutem Ethanol, bis die Wäschen neutral sind; Einweichen der Kohlenstoffblätter in einer Eisen (III) nitratlösung in einem Ölbad bei 80 °C für 6 h und Erhitzen der Kohlenstoffblätter bei 900 °C in einer Stickstoffatmosphäre für 2 h; nach dem Abkühlen, Einweichen der Kohlenstoffblätter in einer verdünnten Salpetersäurelösung und Rühren des Systems für 30 min bei 80 °C; Waschen der Kohlenstoffblätter mit deionisiertem Wasser und absolutem Ethanol, bis die Wäschen einen neutralen pH-Wert zeigen, und Trocknen, um den graphitierten Kohlenstoffschaum zu erhalten, und
die Herstellung des Keramikpulvers umfasst: Einstellen einer Graphenoxidlösung auf pH 10-11 durch Zugeben von Ammoniakwasser; Lösen von Nanoaluminiumoxid in einer gemischten Lösung von Ethanol und deionisiertem Wasser, Zugeben der Mischung in die Graphenoxidlösung und Beschallen der Mischung für 2-3 h; Zentrifugieren der Mischung und Lyophilisieren der ausgefällten Paste in flüssigem Stickstoff; Erhitzen des Produkts bei 990-1010 °C für 0,5-1 h in einer Stickstoffatmosphäre, um ein Nanoaluminiumoxid-Hybridpulver zu erhalten; und Mischen des Nanoaluminiumoxid-Hybridpulvers mit Suspensionen aus Mikroaluminiumoxid, Mikroböhmit, Mikrosiliciumdioxid, Mikromagnesiumhydroxid und einem bakteriellen Cellulosenanopartikel und Rühren der Mischung in einem Mischer für 10 min, um das Keramikpulver zu erhalten.

2. Verfahren zum Herstellen des beschichteten Separators für eine Lithium-Ionen-Batterie nach Anspruch 1, wobei in Schritt S2 die Beschichtungsmasse 100-200 Teile des Reinstwassers, 0,46-2,4 Teile des Dispergiermittels, 40-80 Teile des Keramikpulvers, 20-40 Teile des graphitierten Kohlenstoffschaums, 0,52-3,3 Teile eines Verdickungsmittels, 1,3-4,5 Teile des Bindemittels und 0,18-0,36 Teile des Benetzungsmittels, gemessen in Gewichtsteilen, umfasst.

3. Verfahren zum Herstellen des beschichteten Separators für eine Lithium-Ionen-Batterie nach Anspruch 1, wobei die Herstellung der Beschichtungsmasse in Schritt S2 umfasst: Rühren von Reinstwasser und dem Dispergiermittel für 10-30 min bei einer Drehzahl von 300-500 U/min; Zugeben des Keramikpulvers zu der Mischung und Rühren für 30-60 min bei einer Drehzahl von 400-800 U/min; Zugeben des graphitierten Kohlenstoffschaums zu der Mischung und Rühren für 30-60 min bei einer Drehzahl von 400-800 U/min; Zugeben des Verdickungsmittels zu der Mischung und Rühren für 50-80 min bei einer reduzierten Drehzahl von 400-700 U/min; Zugeben des Bindemittels zu der Mischung und Rühren für 20-40 min bei einer reduzierten Drehzahl von 400-600 U/min; und schließlich Zugeben des Benetzungsmittels zu der Mischung, Rühren für 20-40 min bei einer Drehzahl von 300-500 U/min und Filtern, um die Beschichtungsmasse zu erhalten.

4. Verfahren zum Herstellen des beschichteten Separators für eine Lithium-Ionen-Batterie nach Anspruch 1, wobei das Dispergiermittel ausgewählt ist aus Oleylaminacetat, einem quartären Alkylammoniumsalz, Aminopropylamindioleat, einem Polyalkohol vom Polyethylenglykoltyp, einem Polyethyleniminderivat und Oleylaminoleat.

5. Verfahren zum Herstellen des beschichteten Separators für eine Lithium-Ionen-Batterie nach Anspruch 1, wobei das Bindemittel ausgewählt ist aus einem Cyanoacrylatderivat-Bindemittel, einem Cyanoacrylat-Polyethylenglykol-Bindemittel, einem Acrylsäure-Bindemittel und einem Vinylacetatpolymerlatex-Bindemittel.

6. Verfahren zum Herstellen des beschichteten Separators für eine Lithium-Ionen-Batterie nach Anspruch 1, wobei das Benetzungsmittel ausgewählt ist aus einem Polyoxyethylentensid, einem Fettsäure-Tensid und einem nichtionischen Silanoltensid.

7. Beschichteter Separator für eine Lithium-Ionen-Batterie, hergestellt durch das Verfahren nach einem der Ansprüche 1 bis 6, wobei der Separator eine Dicke von 0,2-5 µm aufweist.

## Revendications

1. Procédé pour la préparation d'un séparateur enduit pour batterie lithium-ion, comprenant :
S1 : sélection d'une membrane de base :
sélection de la membrane de base parmi une membrane en polyéthylène, une membrane en polypropylène, une membrane en tissu non tissé et une membrane en poly-imide ;
S2 : préparation d'une suspension de revêtement :
mélange d'eau ultra pure, d'un dispersant, d'une poudre de céramique, d'une mousse de carbone graphitée, d'un liant et d'un agent mouillant et l'agitation du mélange pour former la suspension de revêtement ;
S3 : préparation d'un séparateur enduit :
application uniforme de la suspension de revêtement de l'étape S2 sur la membrane de base de l'étape S1 par revêtement au rouleau, et séchage et enroulement de la membrane de base enduite afin d'obtenir le séparateur enduit pour batterie lithium-ion,
**caractérisé en ce que** :
la préparation de la mousse de carbone graphitée comprend : le trempage d'un bois dans une solution d'ammoniaque dans un bain d'huile à 100 °C pendant 3 à 4 h ; lavage à répétition du bois avec de l'eau désionisée et de l'éthanol absolu 2 à 5 fois ; après le séchage, chauffage du bois à entre 890 et 900 °C dans une atmosphère d'azote pendant 2 à 3 h ; découpage du bois en feuilles de carbone, et trempage des feuilles de carbone dans une solution d'acide mixte d'acide nitrique et d'acide sulfurique pendant 30 min ; lavage des feuilles de carbone avec de l'eau désionisée et de l'éthanol absolu jusqu'à ce que les lavages soient neutres ; trempage des feuilles de carbone dans une solution de nitrate de fer (III) dans un bain d'huile à 80 °C pendant 6 h, et chauffage des feuilles de carbone à 900 °C dans une atmosphère d'azote pendant 2 h ; après refroidissement, trempage des feuilles de carbone dans une solution d'acide nitrique diluée, et agitation du système pendant 30 min à 80 °C ; lavage des feuilles de carbone avec de l'eau désionisée et de l'éthanol absolu jusqu'à ce que les lavages présentent un pH neutre, et séchage afin d'obtenir une mousse de carbone graphitée, et
la préparation de la poudre de céramique comprend : réglage d'une solution d'oxyde de graphène à un pH de 10 à 11 en ajoutant de l'eau ammoniaquée ; dissolution de nano-alumine dans une solution mixte d'éthanol et d'eau désionisée, ajout du mélange à la solution d'oxyde de graphène et sonication du mélange pendant 2 à 3 h ; centrifugation du mélange, et lyophilisation du précipité de pâte dans de l'azote liquide ; chauffage du produit à entre 990 et 1010 °C pendant 0,5 à 1 h dans une atmosphère d'azote afin d'obtenir une poudre hybride de nano-alumine ; et mélange de la poudre hybride de nano-alumine avec des suspensions de micro-alumine, de micro-boehmite, de micro-silice, de micro-hydroxyde de magnésium et d'une nano-particule de cellulose bactérienne, et agitation du mélange dans un mélangeur pendant 10 min afin d'obtenir la poudre de céramique.

2. Procédé pour la préparation du séparateur enduit pour batterie lithium-ion selon la revendication 1, dans lequel dans l'étape S2, la suspension de revêtement comprend 100 à 200 parties de l'eau ultrapure, 0,46 à 2,4 parties du dispersant, 40 à 80 parties de la poudre de céramique, 20 à 40 parties de la mousse de carbone graphitée, 0,52 à 3,3 parties d'un agent épaississant, 1,3 à 4,5 parties du liant et 0,18 à 0,36 partie de l'agent mouillant, par partie en poids.

3. Procédé pour la préparation du séparateur enduit pour batterie lithium-ion selon la revendication 1 dans lequel la préparation de la suspension de revêtement dans l'étape S2 comprend : agitation de l'eau ultrapure et du dispersant pendant 10 à 30 min à une vitesse de rotation de 300 à 500 tr/min ; ajout de la poudre de céramique au mélange et agitation pendant 30 à 60 min à une vitesse de rotation de 400 à 800 tr/min ; ajout de la mousse de carbone graphitée au mélange et agitation pendant 30 à 60 min à une vitesse de rotation de 400 à 800 tr/min ; ajout de l'agent épaississant au mélange et agitation pendant 50 à 80 min à une vitesse de rotation réduite de 400 à 700 tr/min ; ajout du liant au mélange et agitation pendant 20 à 40 min à une vitesse de rotation réduite de 400 à 600 tr/min ; et enfin ajout de l'agent mouillant au mélange, agitation pendant 20 à 40 min à une vitesse de rotation de 300 à 500 tr/min, et filtrage afin d'obtenir la suspension de revêtement.

4. Procédé pour la préparation du séparateur enduit pour batterie lithium-ion selon la revendication 1, dans lequel le dispersant est un parmi l'acétate d'oléylamine, un sel d'ammonium quaternaire à radical alkyle, le dioléate d'aminopropylamine, un polyalcool de type polyéthylène glycol, un dérivé de polyéthylène-imine et l'oléate d'oléylamine.

5. Procédé pour la préparation du séparateur enduit pour batterie lithium-ion selon la revendication 1, dans lequel le liant est un parmi un liant pour dérivé du cyanoacrylate, un liant pour cyanoacrylate-polyéthylène glycol, un liant pour acide acrylique et un liant pour latex de polymère d'acétate de vinyle.

6. Procédé pour la préparation du séparateur enduit pour batterie lithium-ion selon la revendication 1, dans lequel l'agent mouillant est un parmi un agent tensioactif de polyoxyéthylène, un agent tensioactif d'acide gras et un agent tensioactif non-ionique de silanol.

7. Séparateur enduit pour batterie lithium-ion préparé par le procédé selon l'une quelconque des revendications 1 à 6, dans lequel le séparateur présente une épaisseur de 0,2 à 5 pm.
